Europäisches Patentamt

European Patent Office

Office européen des brevets

(11) Veröffentlichungsnummer: **0 274 113**
**A1**

## (12) EUROPÄISCHE PATENTANMELDUNG

(21) Anmeldenummer: **87119041.9**

(22) Anmeldetag: **22.12.87**

(51) Int. Cl.4: **B01D 36/04** , B01D 21/24 , B01D 29/30

(30) Priorität: **07.01.87 DE 8700300 U**

(43) Veröffentlichungstag der Anmeldung:
**13.07.88 Patentblatt 88/28**

(84) Benannte Vertragsstaaten:
**AT BE CH DE ES FR GB GR IT LI LU NL SE**

(71) Anmelder: **INTERATOM Gesellschaft mit
beschränkter Haftung
Friedrich-Ebert-Strasse
D-5060 Bergisch Gladbach 1(DE)**

(72) Erfinder: **Müller-Frank, Ulrich, Dr.
Otto-Hahn-Strasse 5
D-5060 Bergisch Gladbach(DE)**
Erfinder: **Schwegmann, Peter, dr.
Schieneborner Weg 9A
D-5263 Lindlar 1(DE)**
Erfinder: **Braun, Gerhard
Untergruendemich 26
D-5063 Overath(DE)**

(74) Vertreter: **Mehl, Ernst, Dipl.-Ing. et al
Postfach 22 01 76
D-8000 München 22(DE)**

(54) **Mobile Wasserfilteranlage.**

(57) Transportable und/oder kompakte Filteranlage für feststoffbeladene Wässer/Abwässer mit senkrechten Mattenfiltern und Filterreinigungsvorrichtungen.

In einem oben offenen, länglichen Behälter begrenzen zwei senkrechte, in Längsrichtung angeordnete Filterflächen (3) eine mittlere Rohwasserkammer (1), die an ihrem unteren Ende trichterförmige Sinkschlammsammler (21) hat, wobei auf beiden Seiten der Rohwasserkammer (1) Filtratkammern (2) angeordnet sind, deren Abflüsse an die Sinkschlammsammler (21) angeschlossen sind. Für den insbesondere transportablen Einsatz bei Überlastung, Störung oder Wartung von stationären Kläranlagen.

FIG 1

## Mobile Wasserfilteranlage

Die vorliegende Erfindung betrifft eine transportable und/oder kompakte Filteranlage mit senkrechten Mattenfiltern für feststoffbelastete Wässer/Abwässer insbesondere für den Fall der Überlastung, Störung oder Wartung an stationären Kläranlagen.

In dem europäischen Patent 0 002 858 mit der Anmeldenummer-78200364.4 wird ein Verfahren zur Sanierung von bei Dauerbetrieb überlasteten Kläranlagen und eine Kläranlage zur Durchführung eines derartigen Verfahrens vorgeschlagen. Die Probleme einer überlasteten Kläranlage und deren Sanierungsmöglichkeiten werden ausführlich beschrieben. Als konstruktive Lösung wird eine Filtriereinrichtung aus hängenden, gewebten Schwerkraft-Filterelementen (in Sackform) vorgeschlagen, die beispielsweise über dem vorhandenen Behandlungsbecken aufgehängt werden sollen. Die Entleerung und Reinigung dieser Filtersäcke ist mit einem erheblichen manuellen Aufwand verbunden. Ein kontinuierlicher Betrieb ist damit nicht möglich.

In dem europäischen Patent 0 067 959 mit der Anmeldenummer 82104230.6 wird eine transportable Vorrichtung zum Aufbereiten von verbrauchten Emulsionen, Lösungen und Industrieabwässern vorgeschlagen, wobei als konstruktive Lösung ein umlaufendes, endloses Zellenband vorgesehen ist, das mit einem erheblichen mechanischen Aufwand bewegt und gereinigt werden soll.

Aufgabe der vorliegenden Erfindung ist eine transportable und/oder kompakte Filteranlage für feststoffbeladene Wässer/Abwässer mit senkrechten Mattenfiltern und Filterreinigungsvorrichtungen für den insbesondere transportablen Einsatz bei Überlastung, Störung oder Wartung bei stationären Kläranlagen.

Zur Lösung dieser Aufgabe wird eine Filteranlage nach dem 1. Anspruch vorgeschlagen. Mit dieser Anordnung kann man innerhalb der für einen Straßentransport zulässigen Abmessungen eine sehr große Filterfläche, die ja letztes Endes die Durchsatzleistung der Anlage begrenzt, unterbringen. Die trichterförmige Ausgestaltung läßt sich besonders günstig zwischen den Rädern bzw. den Achsen eines Fahrzeugs unterbringen. Die vorgeschlagenen senkrechten Filterflächen lassen sich, wie in der späteren Beschreibung noch dargestellt wird, mit bekannten Vorrichtungen während des Betriebes reinigen. Der im wesentlichen auf der Rohwasserseite anfallende Sinkschlamm setzt sich in den trichterförmigen Sinkschlammsammlern ab und kann dort ohne Störung des Betriebes abgezogen werden. Alle zusätzlichen zum Betrieb notwendigen Einrichtungen wie Pumpen und Armaturen sind ausschließlich an den beiden Behälterstirnseiten angeordnet, damit die für den Straßentransport zulässige Breite nicht überschritten wird.

Die Anordnung nach dem 2. Anspruch dient einerseits zum Spülen der Sinkschlammsammler und andererseits zum restlosen Entleeren der Filtratkammern. Damit entfallen zusätzliche Leitungen oder Armaturen für diesen Zweck.

Die Anordnung nach dem 3. Anspruch dient auf der Rohwasserseite dazu, eventuelle, auf dessen Oberfläche schwimmende Verunreinigungen abzulassen. Auf der Reinwasserseite, d. h. bei den beiden Filtratkammern, dienen diese Überlaufwehre als normaler Abfluß während des Betriebes, damit die beiden Filterflächen gleichmäßig beladen und auch nicht durch unterschiedliche Wasserhöhen belastet werden. Die beiden Sammelkammern sind durch eine Rohrleitung unterhalb der Überlaufwehre verbunden, wobei diese Leitung gleichzeitig an einen gemeinsamen Abfluß für das Filtrat angeschlossen werden kann.

Die senkrechten Mattenfilter lassen sich durch Abspritzen mit Wasser, das aus einer unteren Verbindungsleitung der beiden Filtratsammler entnommen wird, mit geringem Aufwand reinigen. Die abgespülten Verunreinigungen werden abgezogen, ohne den Filterbetrieb zu stören.

Für die erfindungsgemäße Filteranlage besonders zweckmäßig erscheinen bewegliche Reinigungsvorrichtungen, wie sie in dem europäischen Patent 0 074 966 mit der Anmeldenummer 82900788.9 und der europäischen Patentanmeldung 86110814.0 beschrieben sind.

Ein besonderer Vorteil der transportablen Ausführung dieser Filteranlage gegenüber Sand- oder Kiesfiltern ist das geringe Leergewicht und die Unabhängigkeit von einer Sand-oder Kiesversorgung. Die in diesem Fall mögliche Leichtbauweise spart nicht nur Gewicht sondern auch Investition, was bei nur kurzzeitig genutzten Apparaten von besonderem Interesse ist.

Die vorliegende Filteranlage ist besonders geeignet für solche Wässer/Abwässer, bei denen durch Zugabe eines geeigneten Flockungsmittels ein großer Teil der gelösten oder suspendierten Verunreinigungen ausgeflockt und abgefiltert werden sollen.

Die Figuren 1 bis 4 zeigen ein Ausführungsbeispiel der Erfindung in Form eines Sattelaufliegers, der von einer üblichen Zugmaschine aufgenommen und auf öffentlichen Straßen verfahren werden kann.

Figur 1 zeigt eine Seitenansicht ohne ein an sich bekanntes Zugfahrzeug.

Figur 2 zeigt eine Draufsicht.

Figur 3 zeigt eine Ansicht von hinten.

Figur 4 zeigt einen Schnitt IV durch Figur 1 bzw. 2.

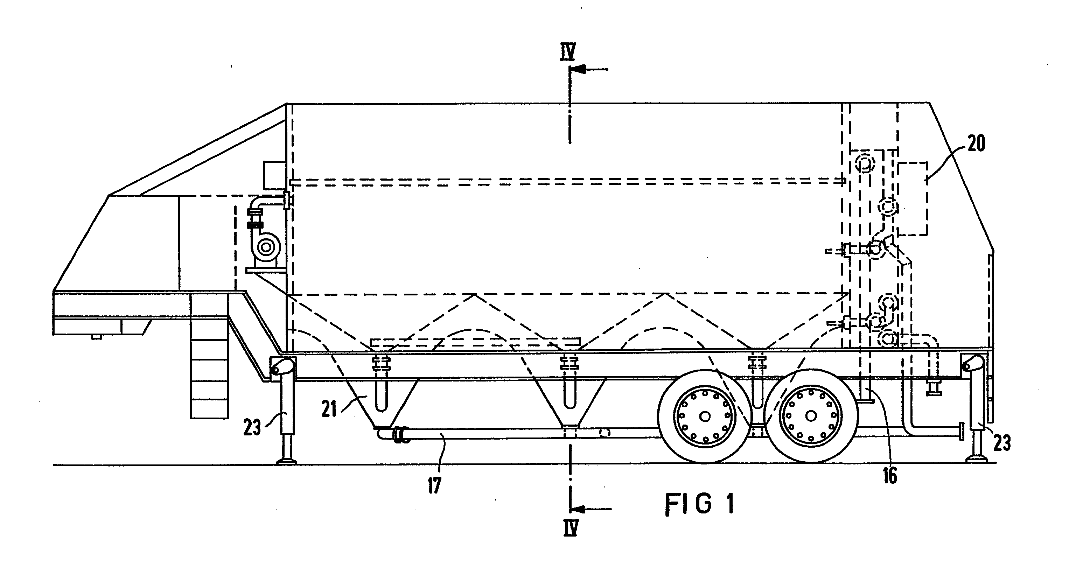

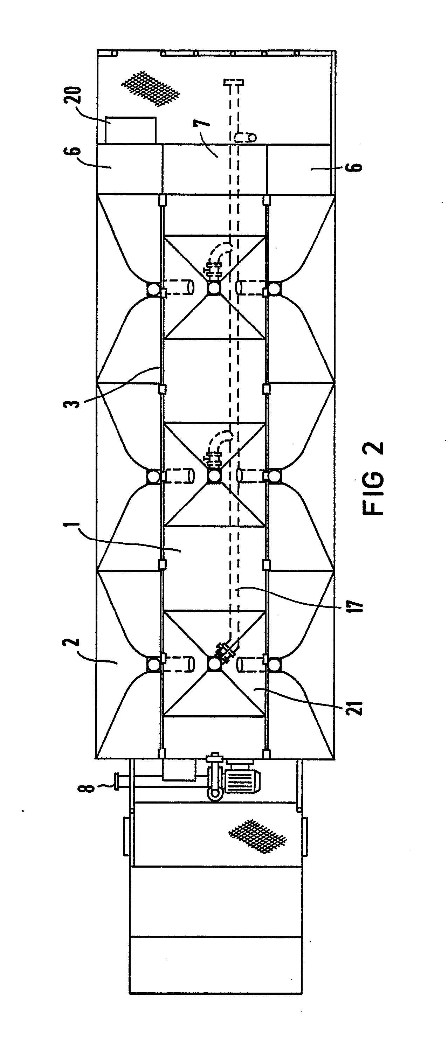

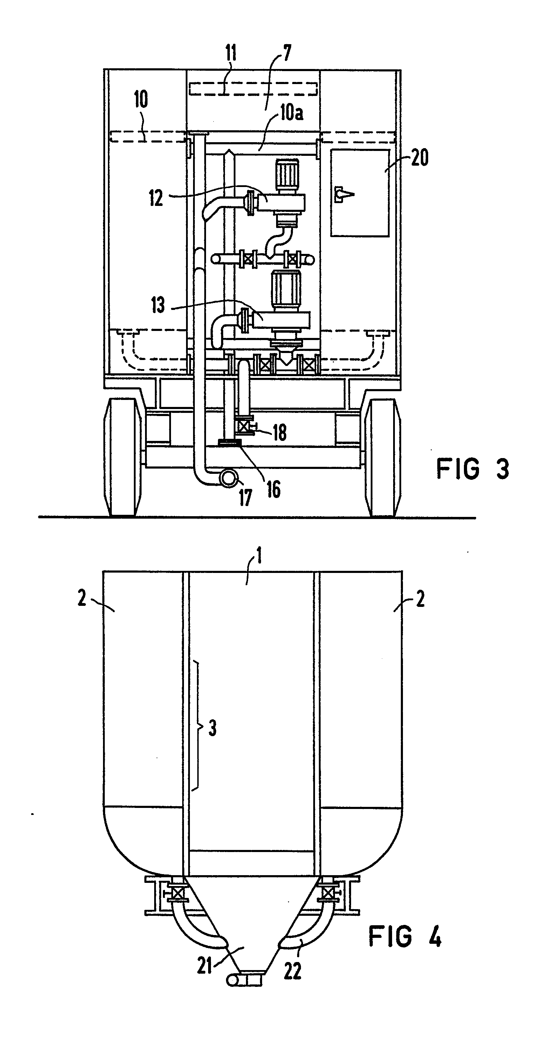

In den Figuren 1 bis 4 ist die von vorne bis hinten ohne Querwände unterteilte Rohwasserkammer 1 von je einer Filtratkammer 2 durch je eine Filterwand 3 getrennt, die auf jeder Seite aus sechs nicht näher beschriebenen Filtermodulen besteht, die jeder für sich mit einer Reinigungsvorrichtung entsprechend dem europäischen Patent 0 002 858 ausgestattet sein kann. Reinigungsvorrichtungen dieser Art entnehmen Wasser von der Reinwasserseite, um damit die Mattenfilter abzuspülen, sie saugen den dabei freiwerdenden Schmutz ab und befördern ihn aus dem System. Sie werden mit an sich bekannten Führungen und Antrieben an den Mattenfiltern entlanggeführt und automatisch entsprechend dem Grad der Verschmutzung in Bewegung gesetzt. Am Ende jeder Filtratkammer 2 ist je ein Filtratsammler 6 angeordnet, während am Ende der Rohwasserkammer 1 ein Skimmer bzw. Überlaufkasten 7 angeordnet ist. Vom Rohwasserzulauf 8 wird mit Hilfe einer Pumpe das zu reinigende Wasser in die Rohwasserkammer 1 befördert, es durchdringt die Filterwände 3 und fließt durch die Filtratkammern 2 über je ein Filtratwehr 10 in je einen der beiden Filtratsammler 6, die über die Verbindungsleitung 10a verbunden sind. Der Überlaufkasten 7 ist über ein Überlaufwehr 11 an die Rohwasserkammer 1 angeschlossen, wird aber nur benutzt, wenn von der Oberfläche des Rohwassers Schwimmschlämme abgelassen werden sollen. Das Überlaufwehr 11 dient auch als Notüberlauf, falls bei einer Störung mehr in das System hineingefördert wird, als über die Filterwände abfließen kann. Unterhalb des Überlaufkastens 7 ist noch eine Saugpumpe 12 und eine Druckpumpe 13 mit ihren dazugehörigen Verrohrungen angeordnet, mit denen, wie oben bereits beschrieben, die Filterwand 3 gereinigt werden kann. Das dafür notwendige Wasser wird aus einer unteren Verbindungsleitung 18 der Filtratsammler entnommen, die gleichzeitig zur Entleerung der Filtratsammler dient. Ein unterhalb der Rohwasserkammer 1 angeordnete Schlamm-Ablauf 17 dient dazu, die Sinkschlamm-Sammler 21 bei Bedarf zu entleeren, während die Filtratkammern 2 über deren Entleerungsleitungen 22 und zugehörigen Armaturen in die Sinkschlamm-Sammler 21 entleert werden können und dabei dort vorhandene Schlammreste hinwegspülen.

**Ansprüche**

1. Filteranlage für feststoffbelastete Wässer/Abwässer mit senkrechten Mattenfiltern und Filterreinigungsvorrichtungen, für den insbesondere transportablen Einsatz bei Überlastung, Störung oder Wartung von Kläranlagen, **dadurch gekennzeichnet,** daß in einem oben offenen, länglichen Behälter zwei senkrechte, in Längsrichtung angeordnete Filterflächen (3) eine mittlere Rohwasserkammer (1) begrenzen, die an ihrem unteren Ende durch ein oder mehrere trichterförmige Sinkschlammsammler (21) begrenzt ist und auf beiden Seiten dieser Rohwasserkammer je eine Filtratkammer (2) angeordnet ist.

2. Filteranlage nach Anspruch 1, **dadurch gekennzeichnet,** daß die beiden Filtratkammern (2) im unteren Bereich geneigte Wände und als Abflüsse Anschlüsse (22) zu den Sinkschlammsammlern (21) haben.

3. Filteranlage nach Anspruch 1, **dadurch gekennzeichnet,** daß am Ende des Behälters die Rohwasserkammer (1) ein Überlaufwehr (11) und die Filtratkammern (2) je ein Filtratwehr (10) haben, wobei das Überlaufwehr (11) in einem Überlaufkasten (7) mündet und diese Filtratwehre (10) in je einem Filtratsammler (6) münden, die miteinander verbunden sind.

4. Filteranlage nach Anspruch 1, **dadurch gekennzeichnet,** daß diese als Sattelauflieger transportabel gestaltet ist und Stützen (23) aufweist, mit denen das Fahrwerk während des Betriebes entlastet ist.

IV

20

21

23

23

17

16

FIG 1

IV

0 274 113

FIG 2

FIG 3

FIG 4

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | US-A-3 221 886 (LAMORT) <br> * Figuren 1,8,10-12; Anspruch 6; Spalte 3, Zeilen 41,42 * | 1,4 | B 01 D 36/04 <br> B 01 D 21/24 <br> B 01 D 29/30 |
| A | | 2,3 | |
| Y | US-A-4 176 066 (SLOAN) <br> * Figuren 1,4; Zusammenfassung; Spalte 3, Zeilen 46-50 * | 1,4 | |
| A | | 2,3 | |
| A | US-A-4 253 955 (KLINE) <br> * Figuren 3-6; Spalte 3, Zeilen 23-46; Spalte 4, Zeilen 41-51 * | 1 | |
| A | US-A-3 600 305 (EDGERTON) <br> * Figuren 2,3; Spalte 4, Zeilen 17,22 * | 1,3 | |
| A | US-A-4 367 145 (SIMPSON et al.) <br> * Figur 1 * | 1,4 | |
| A | DE-A-2 538 940 (BÄHR) <br> * Ansprüche 1-4; Figuren 1,5,8 * | 1,4 | RECHERCHIERTE SACHGEBIETE (Int. Cl.4) |
| A,D | WO-A-8 203 338 (PROMETALL AG) <br> * Figur 1; Ansprüche 1,5; Seite 5, Absätze 4,5 * | 1 | B 01 D |

Der vorliegende Recherchenbericht wurde für alle Patentansprüche erstellt

| Recherchenort | Abschlußdatum der Recherche | Prüfer |
|---|---|---|
| DEN HAAG | 11-02-1988 | CZECH B.P. |